# EUROPEAN PATENT APPLICATION

(11) **EP 1 591 925 A2**
(43) Date of publication of application: **02.11.2005**
(21) Application number: 05251535.0
(22) Date of filing: 15.03.2005
(51) Int. Cl.: G06F 17/30

(54) **Method and apparatus for classification of relative position of one or more text messages in an email thread**

(30) Priority: 27.04.2004 US 833262
(71) Applicant: Avaya Technology Corp., Basking Ridge, NJ 07920 (US)
(72) Inventor: Bagga, Amit, Green Brook, NJ 08812 (US); Nenkova, Ani N., c/o Michele Banko, Seattle, WA 98102 (US)
(74) Representative: Williams, David John

(57) **Abstract**

Methods and apparatus are disclosed for classifying the relative position of one or more text messages (including transcribed audio messages) in a related thread of text messages. One or more classifiers are applied to the text messages; and a classification of the text messages is obtained that indicates the relative position of the text messages in the thread. For example, a thread can include a root message, a leaf message and one or more inner messages, and the classification can indicate whether each text message is a root message, a leaf message or an inner message. The classifiers are trained on a set of training messages that have been previously classified to indicate a relative position ofeach training message in a corresponding thread. The classifiers employ one or more features that help to distinguish between root and non-root messages.

## Description

### Field of the Invention

The present invention relates generally to techniques for classifying textual messages, such as electronic mail messages, and more particularly, to methods and apparatus for classifying one or more text messages into a category indicating the relative position of a text message in a thread of such text messages.

### Background of the Invention

Email and other text messages have quickly become an integral part of business communication. Email is increasingly used by customers to interact with businesses in order to obtain desired information or services. Therefore, business customer service centers, or contact centers, are processing larger amounts of email. While most businesses have sophisticated systems for processing customer contacts via telephone, such as interactive voice response systems, businesses typically do not have similar systems for processing email and other text messages. Typically, incoming emails are processed manually by a human operator who routes each email message to the appropriate destination.

There is a large body of research that has been performed in the general area of text processing. For example, systems have been proposed or suggested that can detect the topic content of newswire stories, extract certain pieces of information from such articles, and extract answers to specific questions. In addition, there exist text classification systems that attempt to classify documents into one of several categories by learning rules or statistics (or both) from sample documents belonging to each predefined category. However, these systems generally work exclusively on newswire data which differs significantly from email data.

A need therefore exists for improved methods and apparatus for classifying text messages, such as email messages, based upon their content into a category indicating the relative position of the text message in a thread of such text messages.

### Summary of the Invention

Generally, methods and apparatus are provided for classifying the relative position of one or more text messages (including transcribed audio messages) in a related thread of text messages. One or more classifiers are applied to the one or more text messages; and a classification of the one or more text messages is obtained that indicates the relative position of the one or more text messages in the thread. For example, a thread can include a root message, a leaf message and one or more inner messages, and the classification can indicate whether the one or more text messages is a root message, a leaf message or an inner message.

The classifiers are trained on a set of training messages that have been previously classified to indicate a relative position of one or more training messages in a corresponding thread. The classifiers can include, for example, a Naive Bayes classifier and a support vector machine classifier. The features employed by the classifiers can be based, for example, on one or more of (i) a number of non-inflected words in the one or more text messages; (ii) a number of noun phrases in the one or more text messages; (iii) a number of verb phrases in the one or more text messages; (iv) a number of predefined punctuation marks in the one or more text messages; (v) a length of the one or more text messages; or (vi) a dictionary of words typically occurring in non-root messages or in root messages.

A more complete understanding of the present invention, as well as further features and advantages of the present invention, will be obtained by reference to the following detailed description and drawings.

### Brief Description of the Drawings

FIG. 1 illustrates a network environment in which the present invention can operate;
FIG. 2 is a schematic block diagram of an exemplary contact center email server incorporating features of the present invention; and
FIG. 3 is a flow chart describing an exemplary implementation of an email message classification process incorporating features of the present invention.

### Detailed Description

The present invention provides methods and apparatus for classifying one or more text messages in a thread of such text messages into a category indicating the relative position of the text message in the thread. In one exemplary implementation, each text message is classified as a root message, inner message or leaf message in a thread. The root message is the first email message in a thread and a leaf message is the final email message in a thread. Root messages generally require a response by a contact center. Root messages include questions, calls for help on certain existing features and solicitation of opinions on specific ideas. It is noted that the present invention can classify the relative position of any form of text message, including transcribed audio messages, such as voice messages.

Root messages are significantly different from inner or leaf messages. With root messages, customers frequently ask questions, while leaf messages generally contain solutions. Root messages that may not require a response include messages that provide suggestions on how to improve products, lists of desired additional features, subscribe and unsubscribe messages and bug reports. A leaf message can be determined when the interaction is fully complete (for example, when the problem has been solved). All other intermediate email messages in the interaction are considered to be inner messages.

The ability to classify an email message as a root message allows the present invention to distinguish between messages that either do not require a response, or do not require an immediate response, and root messages that require an immediate response. The present invention thus allows a contact center to identify and escalate the priority of important messages. In addition, the identification of root messages is useful because it helps the contact center open a record for the problem. Identification of inner messages helps keep track of the progress on the problem. Finally, identification of leaf messages indicates when the problem has been solved.

In the exemplary embodiment, the present invention classifies an email into one of three categories, namely, root, inner or leaf node The distinction between inner and leaf messages is very challenging even for humans, as there is generally no explicit message indicating that the problems has been resolved. Leaf messages may include explicit acknowledgment messages, or may just present a solution to a problem. In the latter case, if the customer does not respond, then the actual solution message becomes the leaf.

The present invention recognizes that there is a significant difference in the language used in the different types of messages and that this difference can be used to distinguish and classify each message type. Root emails, for example, usually consist of questions, calls for help and opinion solicitations. For example, an email message may include a question, "I was wondering if ... ". If an email message answers a question, such as "Is the problem solved?," the answer may be used to classify the email. The following email will be a leaf message if the answer is that no further communication is necessary.

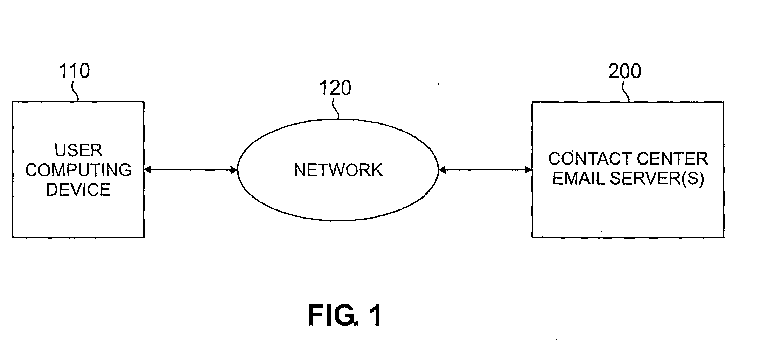

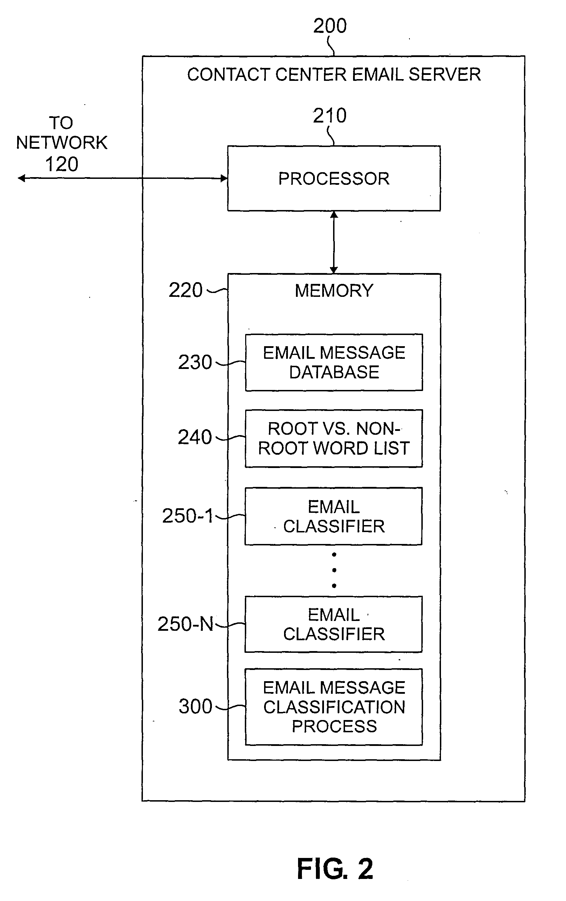

FIG. 1 illustrates an exemplary network environment in which the present invention can operate. As shown in FIG. 1, a user employing a computing device 110 sends a text message, such as an email to a contact center email server 200, discussed below in conjunction with FIG. 2, over a network 120. The network 120 may be embodied as any private or public wired or wireless network, including the Public Switched Telephone Network, a Private Branch Exchange switch, Internet, or cellular network, or some combination of the foregoing. While the present invention is illustrated using a server side implementation, where the features of the present invention are resident on the contact center email server 200, the features and functions of the present invention may be deployed on a number of distributed servers 200, as well as on a client associated with the user computing device 110, or a combination of the foregoing, as would be apparent to a person of ordinary skill in the art.

FIG. 2 is a schematic block diagram of an exemplary contact center email server 200 incorporating features of the present invention. The contact center email server 200 may be any computing device, such as a personal computer, work station or server. As shown in FIG. 2, the exemplary contact center email server 200 includes a processor 210 and a memory 220, in addition to other conventional elements (not shown). The processor 210 operates in conjunction with the memory 220 to execute one or more software programs. Such programs may be stored in memory 220 or another storage device accessible to the contact center email server 200 and executed by the processor 210 in a conventional manner.

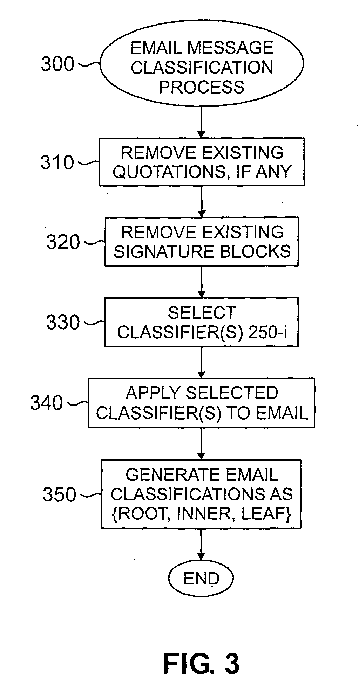

For example, the memory 220 may store a text message database 230, a root versus non-root word list 240, one or more email classifiers 250-1 through 250-N, and a email message classification process 300, discussed below in conjunction with FIG. 3. Generally, the text message database 230 contains one or more text messages that are processed by the email message classification process 300 in accordance with the present invention to classify the text message into a category indicating the relative position of the text message in a thread of such text messages. The root versus non-root word list 240 is described below in conjunction with a Dictionary feature in the section entitled "Classifier Features."

In an exemplary implementation, the text message database 230 contains a collection of text messages, referred to as the Pine-Info mailing list (www.washington.edu/pine/pine-info/). The Pine-Info mailing list comprises a list of email messages regarding features, bugs and other issues related to the Pine software. The discussion in the mailing list is generally focused and is oriented towards solving problems related to the Pine software. It is noted that text messages can be processed by the present invention in real time as they are received, and need not be obtained from a database 230 of such text messages. It is further noted that the text message database 230 can include any text message, including transcribed audio messages.

### Email Classifiers

The email classifiers 250 may be embodied, for example, using existing classification tools, such as Rainbow and SvmLight. The email classifiers 250 are trained using a training corpus of email messages that have previously been classified, in a known manner. The trained email classifiers 250 employ an exemplary feature set, described below in a section entitled "Classifier Features," that has been selected to allow the present invention to classify one or more text messages in a thread of such text messages into a category indicating the relative position of the text message in the thread.

Generally, Rainbow is a Naive Bayes classifier, described in A. McCallum and K. Nigam, "A Comparison of Event Models for Naïve Bayes Text Classification," Proc. Of AAAI-98 Workshop on Learning for Text Categorization (1998). Rainbow also offers a *k* nearest neighbor (knn) classification option. The Naive Bayes classifier 250 is attractive because of its simplicity. A training corpus of email messages that have previously been classified is used to gather statistics about the words that appear in the documents. An independence assumption is made. In other words, the probability of a word occurring in a document is assumed to be independent of the word's context and position in the document. Classification can then be performed on test documents by calculating the posterior probability of each class given the evidence of the test document (that is, given the words that appear in the document), and selecting the class with highest probability.

SvmLight is an implementation of support vector machines (SVMs), as described in V. Vapnik, Statistical Learning Theory, Wiley (1998) Generally, the support vector machines are based on the structural risk minimization principle described in V. Vapnik, Estimation of Dependencies Based on Empirical Data, Springer (1982), from statistical learning theory and are theoretically more complex.

The simplicity of Naive Bayes classification and the superiority of SVMs in the text classification task over other methods played a role in choosing these two specific tools for the exemplary implementation.

### Classifier Features

As previously indicated, the email classifier(s) 250 employ an exemplary feature set that has been selected to allow the present invention to classify one or more text messages in a thread of such text messages into a category indicating the relative position of the text message in the thread. The classifier(s) 250 can employ one or more of the following features:

### i. Non-Inflected Words

The non-inflected forms (i.e., root forms) of the content words appearing in the email messages were obtained using a dictionary, such as Wordnet, and the non-inflected form count can be used as a feature. In one exemplary implementation, only nouns, verbs, adjectives and adverbs were used as features and all function words, such as prepositions and determiners were excluded from consideration.

### ii. Noun Phrases

Noun phrases can be identified, for example, using the Ltchunk tool, and their occurrence can be used as a feature. A simple noun phrase consists of the head noun, plus all its adjectival and nominal premodifiers. For example "the new Pine version" will be marked as one simple noun phrase having a head noun "version." It has been suggested that information on noun phrases and their heads can give good indication of importance. Ltchunk is a tool that takes plain text and assigns part of speech to each word and also brackets simple noun and verb phrases. The Ltchunk tool can also identify the sentence boundaries.

### iii. Verb Phrases

Verb phrases can be identified, for example, using the Ltchunk tool, and their occurrence can be used as a feature. A simple verb phrase consists of a main verb, plus the associated auxiliary verbs.

### iv. Punctuation

The number of exclamation marks, question marks and full stops in the email can be used a feature. Generally, the present invention recognizes that emails that report problems or pose questions (most probably root messages) will be characterized by different punctuation than messages that contain answers or solutions.

### v. Length of Email Message

The length of an email message, for example, in terms of the number of sentences can also be used as a feature. The length of an email message can be computed, for example, using the sentence boundary information identified by the Ltchunk tool.

### vi. Root versus Non-Root Dictionaries

The presence of words from specially constructed dictionaries can also form a classification feature. For example, an exemplary root versus non-root word list 240 can be based on an examination of a set of root and non-root messages. Two dictionaries can be constructed with a first dictionary listing words typically occurring in non-root messages and another dictionary listing words typically occurring in root messages. The occurrence numbers can optionally be tested for statistical significance with the binomial test and those with pvalues below 0.05 can be included in the dictionary. For a discussion of techniques for creating such dictionaries, see, for example, B. Schiffman, "Building a Resource for Evaluating the Importance of Sentences," Proc. Of LREC-02 (2002), where a dictionary was constructed of words that appear more frequently in the beginning sentence of newspaper articles than anywhere else in an article. The words from these dictionaries 240 are used in the root versus non-root classification task. In an exemplary implementation, the list of words typical for root messages was very short, while the list of words typical for non-root messages consisted of many entries. Both lists contain some number of personal names, suggesting that there are people whose postings to the discussion list consistently get ignored and also there are people whose emails tend to always evoke a response. Words from the non-root message dictionary 240 include: follow, business, run, account, say, look, group, find, file, fine, report, try, something, information, page, suggestion, printer, download and network.

FIG. 3 is a flow chart describing an exemplary implementation of a email message classification process 300 incorporating features of the present invention. As shown in FIG. 3, the email message classification process 300 initially removes existing quotations, if any, from the email message(s) being processed during step 310 and removes any signature blocks during step 320. The pre-processing performed during steps 310 and 320 can be quite important for any kind of further interpretation of the email message, because the blocks of quoted material and the signature block can be seen as extraneous material and might lead to distortion of the statistics about word occurrences in the body of the message.

One or more classifier(s) 250-i are selected during step 330 to classify the email message. For example, the email message classification process 300 can apply one or more default classifiers to each email message and integrate the various classifications to obtain a single classification, or can select a particular classifier 250 to employ based, for example, on the content of the email.

The selected classifier(s) 250 are applied to the email message during step 340 and a classification of the email as a {root, inner, leaf} email message is obtained during step 350. The selected email classifiers 250 have already been trained using a training corpus of email messages that have previously been classified, as described above. The trained email classifiers 250 employ one or more of the features described above in the section entitled "Classifier Features." Generally, the features are selected to allow the email messages in a thread to be classified into a category indicating the relative position of the text message in the thread (e.g., root, inner or leaf message).

### System and Article of Manufacture Details

As is known in the art, the methods and apparatus discussed herein may be distributed as an article of manufacture that itself comprises a computer readable medium having computer readable code means embodied thereon. The computer readable program code means is operable, in conjunction with a computer system, to carry out all or some of the steps to perform the methods or create the apparatuses discussed herein. The computer readable medium may be a recordable medium (e.g., floppy disks, hard drives, compact disks, or memory cards) or may be a transmission medium (e.g., a network comprising fiber-optics, the world-wide web, cables, or a wireless channel using time-division multiple access, code-division multiple access, or other radio-frequency channel). Any medium known or developed that can store information suitable for use with a computer system may be used. The computer-readable code means is any mechanism for allowing a computer to read instructions and data, such as magnetic variations on a magnetic media or height variations on the surface of a compact disk.

The computer systems and servers described herein each contain a memory that will configure associated processors to implement the methods, steps, and functions disclosed herein. The memories could be distributed or local and the processors could be distributed or singular. The memories could be implemented as an electrical, magnetic or optical memory, or any combination of these or other types of storage devices. Moreover, the term "memory" should be construed broadly enough to encompass any information able to be read from or written to an address in the addressable space accessed by an associated processor. With this definition, information on a network is still within a memory because the associated processor can retrieve the information from the network.

It is to be understood that the embodiments and variations shown and described herein are merely illustrative of the principles of this invention and that various modifications may be implemented by those skilled in the art without departing from the scope and spirit of the invention.

## Claims

1. A method for classifying one or more text messages in a related thread of text messages, comprising:
applying one or more classifiers to said one or more text messages and
obtaining a classification of said one or more text messages indicating a relative position of said one or more text messages in said thread.

2. The method of claim 1, wherein said thread includes a root message, a leaf message and one or more inner messages, and wherein said classification indicates whether said one or more text messages is a root message, a leaf message or an inner message.

3. The method of claim 1, wherein said one or more classifiers are trained on a set of training messages that have been previously classified to indicate a relative position of said one or more training messages in a corresponding thread.

4. The method of claim 1, wherein said one or more classifiers includes a Naive Bayes classifier or a support vector machine classifier.

5. The method of claim 1, wherein said one or more classifiers employ a feature based on (i) a number of non-inflected words in said one or more text messages; (ii) a number of noun phrases in said one or more text messages; (iii) a number of verb phrases in said one or more text messages; (iv) a number of predefined punctuation marks in said one or more text messages; or (v) a length of said one or more text messages.

6. The method of claim 1, wherein said one or more classifiers employ one or more dictionaries indicating whether a set of words typically occur in non-root messages or in root messages.

7. An apparatus for classifying one or more text messages in a related thread of text messages, comprising:
a memory; and
at least one processor, coupled to the memory, operative to:
apply one or more classifiers to said one or more text messages; and
obtain a classification of said one or more text messages indicating a relative position of said one or more text messages in said thread.

8. The apparatus of claim 7, wherein said thread includes a root message, a leaf message and one or more inner messages, and wherein said classification indicates whether said one or more text messages is a root message, a leaf message or an inner message.

9. The apparatus of claim 7, wherein said one or more classifiers are trained on a set of training messages that have been previously classified to indicate a relative position of said one or more training messages in a corresponding thread.

10. The apparatus of claim 7, wherein said one or more classifiers includes a Naive Bayes classifier or a support vector machine classifier.
